# EUROPÄISCHE PATENTANMELDUNG

(11) **EP 2 281 701 A1**
(43) Veröffentlichungstag der Anmeldung: **09.02.2011**
(21) Anmeldenummer: 10167907.4
(22) Anmeldetag: 30.06.2010
(51) Int. Cl.: B60G 3/14, B60G 21/05

(54) **Querträger für eine Verbundlenkerachse**

(30) Priorität: 07.08.2009 DE 102009036531
(71) Anmelder: Muhr und Bender KG, 57439 Attendorn (DE)
(72) Erfinder: Kobelev, Prof. Dr.Vladimir, 57439, Attendorn (DE); Klaus, Ulrich, 57439, Attendorn (DE); Scheffe, Ute, 57223, Kreuztal (DE); Ivo, Joachim, 57368, Lennestadt-Elspe (DE)
(74) Vertreter: Oberwalleney, Stephan

(57) **Zusammenfassung**

Querträger für eine Verbundlenkerachse 11, umfassend zwei Längslenker 13, 14 und einen Querträger 12, der mit den Längslenkern 13, 14 jeweils fest verbindbar ist und der aus einem Blechprofil mit geschlossenem Querschnitt besteht, wobei ein mittlerer Abschnitt 18 des Querträgers 12 eine geringere Querschnittsfläche hat, als die mit den Längslenkern 13, 14 verbindbaren Endabschnitte 19, 20 des Querträgers 12, wobei der Querschnitt des mittleren Abschnitts 18 mindestens drei von einer Außenwölbung 27, 28, 29, 30 abgeschlossene doppelwandige Stege 23, 24, 25, 26 aufweist, die zumindest zum Teil durch Einziehungen 31, 32, 33, 34 mit Innenwölbung voneinander getrennt sind.

## Beschreibung

Die Erfindung betrifft einen Querträger für eine Verbundlenkerachse, umfassend zwei Längslenker und einen Querträger, der mit den Längslenkern jeweils fest verbindbar ist und der aus einem Blechprofil mit geschlossenem Querschnitt besteht, wobei ein mittlerer Abschnitt des Querträgers eine geringere Querschnittsfläche hat, als die mit den Längslenkern verbindbaren Endabschnitte des Querträgers. Die Erfindung betrifft weiterhin eine Verbundlenkerachse, die unter Verwendung eines derartigen Querträgers und zweier Längslenker aufgebaut ist.

Eine Verbundlenkerachse bildet ein sehr einfaches, wartungsfreies und raumsparendes Achskonzept, das keinen Achsträger benötigt. Verbundlenkerachsen sind vorrangig für nicht angetriebene Hinterachsen geeignet. Die Radaufhängung mittels einer Verbundlenkerachse ist die allgemeine Form der kinematischen Führung zweier Räder einer Fahrzeugachse; insgesamt sind für den Mechanismus dieser Führung zwei Freiheitsgrade nötig, was bei Einzelradaufhängung dadurch erreicht wird, daß jedes Rad unabhängig vom anderen einen Freiheitsgrad gegenüber dem Fahrzeugkörper erhält, und bei Starrachsausführung, indem der gesamte Achskörper mit zwei Freiheitsgraden gegenüber dem Fahrzeugkörper aufgehängt wird. Eine Verbundlenkerachse stellt grundsätzlich einen verwindbaren Rahmen da.

Verbundlenkerachsen werden eingesetzt, um einen Kompromiß zwischen den Eigenschaften der Einzelradaufhängung und der Starrachsaufhängung zu erzielen, zum Beispiel geringe Spur, Sturz- und Vorspuränderung bei symmetrischen Federungsbewegungen und einen günstigen Radsturz sowie eine merkliche Wankzentrumshöhe und ein eventuell ausgeprägtes kinematisches Eigenlenkverhalten bei antimetrischer Federungsbewegung.

Eine Verbundlenkerachse vereinigt einige Eigenschaften von Starrachse und Einzelradaufhängung; einerseits von der Starrachse bekannte geringe Spur-, Sturz- und Vorspuränderungen bei symmetrischer Radfederung, andererseits einen günstigen Radsturz und merkliche Wankzentrumshöhe sowie ein ausgeprägtes kinematisches Eigenlenkverhalten bei asymmetrischer Radfederung, wie es die Einzelradaufhängung ermöglicht.

Die beiden Radträger einer Verbundlenkerachse sind auf biege- und torsionssteifen Längslenkern befestigt, die wiederum in Querrichtung durch einen Querträger (auch Querstrebe genannt) fest miteinander verbunden sind. Während die Längskräfte alleine von den steifen Längslenkern aufgenommen werden, sind Querkräfte und Sturzmomente durch die versteifende Wirkung des Querträgers abzufangen. Hierzu ist das Profil des Querträgers biegesteif auszuführen. Gleichzeitig ist das Profil torsionsweich auszulegen, um neben der Funktion eines Stabilisatorstabes auch das eingeschränkte unabhängige Einfedern der beiden Räder zu ermöglichen.

Entscheidend für die kinematischen Eigenschaften einer Verbundlenkerachse ist die Lage des Schubmittelpunkts des Querträgerprofils, da sich hierüber zusammen mit der Geometrie der Verbundlenkerachse die Vorspurkurve bei wechselseitigem Einfedern und somit bei Kurvenfahrt definiert. Bei paralleler Federungsbewegung der Räder schwenkt eine Verbundlenkerachse um die Verbindungslinie A der fahrzeugseitigen Längslenkerlager. Sowohl die Verbiegung als auch die Torsion des Querträgers verschwinden bei paralleler Federungsbewegung der Räder. Die mechanische Beanspruchung des Querträgers bei der Wankfederung hängt im wesentlichen von der Lage des Schubmittelpunktes (neutrale Torsionsachse des Querträgers) einerseits und von der Verbindungslinie durch die fahrzeugseitigen Längslenkerlager (Drehachse der Verbundlenkerachse B) andererseits ab. Im allgemeinen liegen beide Achsen A und B parallel mit einem Abstand zueinander. Der Querträger verwindet sich bei Wankfederung um die durch seinen Schubmittelpunkt vorgegebene neutrale Torsionsachse A und verbiegt sich. Die deformierte Mittellinie des Querträgers wird in diesem Fall S-förmig. An den beiden Enden des Querträgers sind die Biegemomente maximal. In der Mitte des Querträgers verschwindet das Biegemoment. Die Spannungen im Material des Querträgers resultieren aus der Überlagerung der Spannungsfelder in Folge der Verwölbung des Querträgers (Schubspannung) und in Folge der Verbiegung (Normalspannung in Längsrichtung des Querträgers).

In besonderen Fällen kann die neutrale Torsionsachse A des Querträgers mit der Drehachse B der Verbundlenkerachse räumlich übereinstimmen. In diesem Fall verwindet sich der Querträger bei Wankfederung um die durch seinen Schubmittelpunkt vorgegebene neutrale Torsionsachse A. Die deformierte Mittellinie des Querträgers bleibt in diesem Fall im wesentlichen gerade.

Aus der EP 0 650 860 A1 ist eine geschweißte Kraftfahrzeug-Hinterachse mit einem Grundkörper und an diesem vorgesehenen Aufnahmen für weitere Bauelemente, wie Schenkel, Lenker, Stoßdämpfer oder Federn bekannt. Der Grundkörper ist ein mittels hydraulischem Innenhochdruck-Umformverfahren geschaffener Hohlkörper, der die Aufnahmen für die Anbauteile enthält, mit nicht konstanter Wandstärke und Querschnittsgeometrie. Als Ausgangsmaterial kommt ein grob vorgebogenes Rohr mit kreisringförmiger Querschnittsfläche zur Anwendung.

Aus der WO 2006/027429 A1 ist eine Verbundlenkerachse mit einem Querträger und hiermit fest verbundenen Längsträgern bekannt. Der Querträger kann verschiedene Querschnitte haben.

Aus der US 4 787 680 ist eine Achse für ein Kraftfahrzeug bekannt. Diese umfasst einen Querabschnitt und zwei hiermit verbundene Arme zum Anbringen von Lenkern. Die Achse ist einteilig aus einem Rohr hergestellt. Der Querabschnitt kann X-förmig oder H-förmig gestaltet sein.

Aus der DE 102 07 151 C1 ist eine Verbundlenkerachse bekannt, die Längslenker umfaßt, die jeweils aus einer Unterschale und einer Oberschale zusammengesetzt sind, und einen Querträger, der die Längslenker verbindet. Der Querträger weist endseitig jeweils Hohlstutzen mit ovalen Querschnitten auf, welche an den Längslenkern angeformte, stirnseitig geschlossene, im Querschnitt ovale Konsolen formschlüssig übergreifen. Der Querträger ist aus einem Rohrkörper hergestellt und weist auf einem überwiegenden Teil seiner Länge ein U-förmiges oder V-förmiges Profil auf, das aus dem Rohrkörper in einem Pressenzug mechanisch umgeformt ist und insofern doppelwandig und über dem Umfang geschlossen ist. Die die U-Form bzw. die V-Form bildenden Wandbereiche liegen hierbei innen flächig aneinander. Dadurch, daß das Profil in der Mitte des Querträgers eingedrückt ist, wird die von den Wandungen umschlossene Fläche nahezu auf Null reduziert und entsprechend die Torsionssteife des Querträgers abgesenkt. Zu den Enden wird mit zunehmendem Querschnitt die Torsions- und Biegesteifheit des Querträgers hin größer.

Der vorliegenden Erfindung liegt hiervon ausgehend die Aufgabe zur Grunde, einen Querträger für eine Verbundlenkerachse und eine damit hergestellte Verbundlenkerachse bereitzustellen, die herstellungstechnisch verbessert darstellbar ist und unter Beibehaltung der Steifigkeit und Festigkeit eine Reduzierung des Bauteilgewichts sowie der Bauteilkosten zuläßt. Die Lösung hierfür besteht in einem Querträger für eine Verbundlenkerachse, umfassend zwei Längslenker und einen Querträger, der mit den Längslenkern jeweils fest verbindbar ist und der aus einem Blechprofil mit geschlossenem Querschnitt besteht, wobei ein mittlerer Abschnitt des Querträgers eine geringere Querschnittsfläche hat, als die mit den Längslenkern verbindbaren Endabschnitte des Querträgers, wobei der Querschnitt des mittleren Abschnitts mindestens drei von einer Außenwölbung abgeschlossene doppelwandige Stege aufweist, die zumindest zum Teil durch Einziehungen voneinander getrennt sind. Mit dieser Formgebung sinkt die Torsionssteifigkeit im mittleren Abschnitt des Querträgers während sich an den Enden ausreichend lange Schweißnähte zur Verbindung mit den Längslenkern herstellen zu lassen. Mechanische Reibung innerhalb des Querträgers, die die Torsionssteifigkeit unkontrolliert beeinflußt, wird vermieden.

Durch unterschiedliche Formgebung der genannten doppelwandigen Stege ist es möglich, die Lage der Schubmittelachse weitgehend frei zu bestimmen und die Biegesteifigkeit des Querträgers um zwei verschiedene Achsen ebenfalls weitgehend frei zu gestalten. Darüber hinaus läßt sich eine gewünschte Torsionsfedersteifigkeit des Querträgers gezielt, d. h. auf gewünschte Werte mittels der Formgebung einstellen.

In bevorzugter Ausgestaltung ist vorgesehen, daß die Wandstärke des Querträgers im mittleren Abschnitt des Querträgers geringer ist, als in den Endabschnitten. Das hierfür einzusetzende Zwischenprodukt, d. h. ein im Querschnitt zu verformender Rohrkörper, ist hierbei insbesondere aus flexibel gewalztem Material, d. h. dick-dünngewalztem Material hergestellt. Die Vergrößerung der Wandstärke zu den Enden des Querträgers und die Reduzierung der Wandstärke im mittleren Abschnitt des Querträgers ermöglichen eine konstante Spannungsverteilung über der Länge des Querträgers und damit eine bessere Materialausnutzung.

Im Hinblick auf eine Optimierung des Verhältnisses von Festigkeit zum Materialeinsatz ist insbesondere vorgesehen, daß die Wandungen der Stege kontaktfrei relativ zueinander sind. Ebenfalls gilt, daß die Wandungen auch im Bereich der Einziehung zwischen den Stegen relativ zueinander kontaktfrei sind. Mit diesen Maßnahmen bleibt die Querschnittsfläche des Querträgers auch im mittleren Abschnitt relativ hoch. Jeweils zwischen zwei benachbarten Stegen ist eine Einziehung, insbesondere mit Innenwölbung, angeordnet.

In einer ersten günstigen Ausgestaltung ist vorgesehen, daß der Querschnitt des mittleren Abschnitts dreistrahlig-sternförmig oder Y-förmig ist und drei voneinander getrennte Stege mit abschließender Außenwölbung und jeweils dazwischen liegende Einziehungen bzw. Innenwölbung aufweist. Hierbei kann die Ausrichtung der Stege weitgehend frei gewählt werden, insbesondere kann ein einzelner Steg am Querträger nach oben weisen oder nach unten weisen.

Eine andere bevorzugte Ausgestaltung geht dahin, daß der Querschnitt des mittleren Abschnitts X-förmig oder kreuzförmig mit vier voneinander getrennten Stegen mit abschließender Außenwölbung und jeweils dazwischen liegende Einziehungen bzw. Innenwölbung aufweist. Auch hier ist eine weitgehend freie Wahl der Ausrichtung des Querträgers im Verhältnis zu der durch Torsionsachse A und Drehachse B vorgegebenen Ebene möglich. Darüber hinaus können die Steglängen der verschiedenen Stege frei gewählt werden.

Nach einer dritten günstigen Ausgestaltung ist vorgesehen, daß der Querschnitt des mittleren Abschnitts H-förmig ist und vier voneinander getrennte Stege mit abschließender Außenwölbung und zwischen jeweils zwei Paaren von Stegen liegende Einziehungen bzw. Innenwölbung aufweist. Bei ebenfalls großer Querschnittsfläche und relativ hoher Torsionssteifigkeit des Querträgers ist hierbei nur eine geringe Umformung des Querträgers im mittleren Abschnitt erforderlich.

Da der Querträger mit mittleren Abschnitt und beiden Endabschnitten vorzugsweise aus einem einzigen Rohr hergestellt werden, ist vorzusehen, daß der mittlere Abschnitt des Querträgers einen konstanten Querschnitt hat und die Endabschnitte sich zu den Enden hin stetig erweitern.

Hieraus ergibt sich weiterhin, daß sich in den Endabschnitten des Querträgers die konkave Krümmung der Einziehungen zu den Enden hin zunehmend verringert.

In den Endabschnitten des Querträgers ändert sich der Querschnitt stetig zur Kastenform, wobei sowohl die Einziehungsbereiche als auch die Außenwölbungen bezüglich ihrer Krümmung weitgehend reduziert werden, wobei sogar der Krümmungssinn verändert werden kann, d. h. von konvex auf konkav beziehungsweise von konkav auf konvex sich ändern kann.

Zur Herstellung des Querträgers wird in jedem Fall zunächst ein Rohr oder Profil mit über der Länge konstantem Querschnitt hergestellt, das jedoch in Längsrichtung variable Wandstärke aufweisen kann. Danach wird das Rohr bevorzugt nach einer ersten Verfahrensführung über der ganzen Länge im Querschnitt gleichmäßig auf den Öffnungsquerschnitt an den Enden verformt und in einem zweiten Verfahrensschritt in seinem mittleren Abschnitt weiter zum abschließenden Querschnitt im mittleren Abschnitt querschnittsreduziert. In einer zweiten Verfahrensführung kann das Rohr in einem ersten Verfahrensschritt über der ganzen Länge gleichmäßig auf den Endquerschnitt des mittleren Abschnitts verformt werden und in einem zweiten Verfahrensschritt bei bereits fertiggestellten Querschnitt im mittleren Abschnitt an den Endabschnitten in einer gegenläufigen Umformung querschnittserweitert werden. Die Querschnittsreduzierungen können jeweils über einem eingeschobenen Kern erfolgen.

Bevorzugte Ausführungsbeispiele der Erfindung sind in den Zeichnungen dargestellt und werden nachstehend beschrieben.
- Figur 1: zeigt eine erfindungsgemäße Verbundlenkerachse als Einheit in 3-D- Darstellung;
- Figur 2: zeigt eine Verbundlenkerachse nach Figur 1 in Explosions-3-D-Darstellung;
- Figur 3: zeigt eine Querstrebe einer erfindungsgemäßen Verbundlenkerachse mit Y- förmigem Mittelabschnitt in 3-D-Darstellung;
- Figur 4: zeigt den Querschnitt der Querstrebe nach Figur 3 im Bereich des mittleren Abschnitts;
- Figur 5: zeigt den Querschnitt der Querstrebe nach Figur 3 an den Enden der End- abschnitte;
- Figur 6: zeigt eine Querstrebe einer erfindungsgemäßen Verbundlenkerachse mit X- förmigem Mittelabschnitt in 3-D-Darstellung;
- Figur 7: zeigt den Querschnitt der Querstrebe nach Figur 6 im Bereich des mittleren Abschnitts;
- Figur 8: zeigt den Querschnitt der Querstrebe nach Figur 6 an den Enden der End- abschnitte;
- Figur 9: zeigt eine Querstrebe einer erfindungsgemäßen Verbundlenkerachse mit H- förmigem Mittelabschnitt in 3-D-Darstellung;
- Figur 10: zeigt den Querschnitt der Querstrebe nach Figur 9 im Bereich des mittleren Abschnitts;
- Figur 11: zeigt den Querschnitt der Querstrebe nach Figur 9 an den Enden der End- abschnitte;
- Figur 12: zeigt eine Querstrebe einer erfindungsgemäßen Verbundlenkerachse mit kreuzförmigem Mittelabschnitt in 3-D-Darstellung;
- Figur 13: zeigt den Querschnitt der Querstrebe nach Figur 12 im Bereich des mittle- ren Abschnitts;
- Figur 14: zeigt den Querschnitt der Querstrebe nach Figur 12 an den Enden der Endabschnitte.

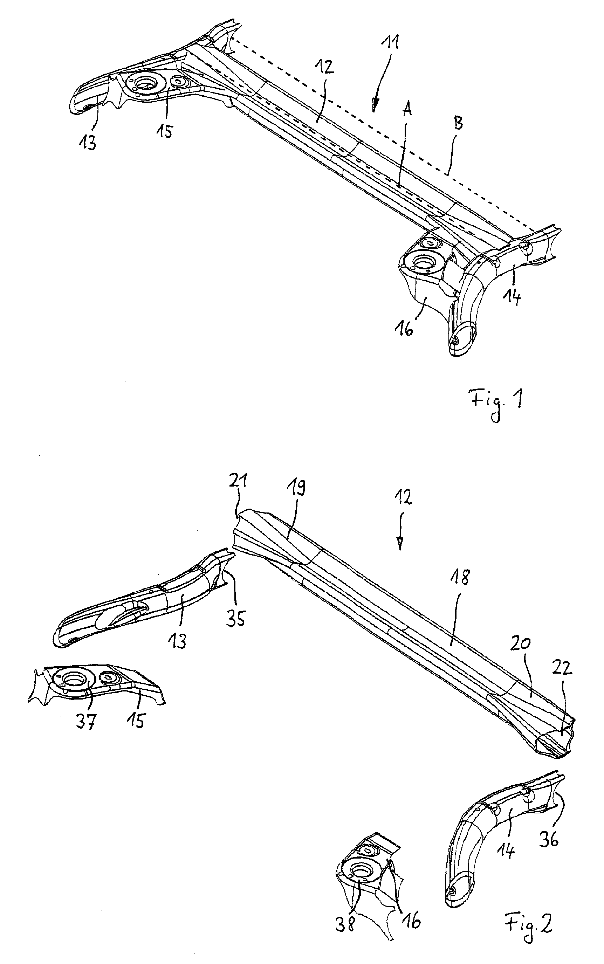

Die Figuren 1 und 2 werden nachstehend gemeinsam beschrieben. Die Figuren 1 und 2 zeigen eine erfindungsgemäße Verbundlenkerachse 11, die zwei symmetrisch zueinander ausgebildete Längslenker 13, 14, zwei symmetrisch zueinander ausgebildete Winkelstücke oder Federabstützungen 15, 16 und eine erfindungsgemäße Querstrebe 12 umfaßt. Während die hier vorgesehenen Winkelstücke jeweils die Längslenker mit der Querstrebe verbinden, können die Federabstützungen jeweils ausschließlich an den Längslenkern angebunden sein. Nachfolgend werden nur die Winkelstücke angesprochen. An der Verbundlenkerachse 11 ist eine neutrale Torsionsachse A der Querstrebe 12 und die durch Lagerungsmittel darstellbare Drehachse B der Verbundlenkerachse als Funktionselement eingezeichnet. Die Längslenker 13, 14 bestehen aus umgeformten Rohrstücken, die jeweils eine einseitige Krümmung aufweisen und an denen verschiedene Abflachungen und vordere Ausschnitte 35, 36 für Lagerungsmittel zu erkennen sind. Die Winkelstücke 15 16 bestehen aus umgeformten Blechen mit angeformten Verbindungslaschen und Federauflagen 37, 38 für Schraubenfedern.

Die erfindungsgemäße Querstrebe 12 ist wie die Längslenker 13, 14 aus einem Rohr ursprünglich gleichen Querschnitts durch Umformung gebildet, wobei ein mittlerer Abschnitt 18 einen in sich konstanten Querschnitt über seine gesamte Länge hat, während zwei Endabschnitte 19, 20 sich zunächst mit gleichem Querschnitt innen an den mittleren Abschnitt 18 anschließen und sich stetig zu einer abweichenden Querschnittsform an den offenen Enden 21, 22 vergrößern. Die Querschnittsform des mittleren Abschnitts 18 entspricht einem Dreistern oder Y-förmigen Balkenstern mit mittig nach unten weisendem Steg. Die freien Stegenden sind im Querschnitt zu Auswölbungen gerundet. Die offenen Enden 21, 22 der Endabschnitte 19, 20 sind vorzugsweise nicht senkrecht zur Querträgerlängsachse abgeschnitten, sondern weisen eine räumliche Begrenzungslinie auf, die es ermöglicht, daß Linienkontakt zwischen der Querstrebe 12 und den Längslenkern 13, 14 hergestellt wird. Die Winkelstücke 15, 16 haben ebenfalls Anschlußkonturen, die einen Linienkontakt mit der Querstrebe 12 einerseits und den Längslenkern 13, 14 andererseits ermöglichen. Hinzukommt gegebenenfalls eine flächige Auflage von Laschenelementen an den Winkelstücken 15, 16 auf Teilen der Querstrebe 12 oder der Längslenker 13, 14.

Abweichend von der hier dargestellten Ausgestaltung kann die Querstrebe 12 auch in die Längslenker 13, 14 eingesteckt sein, wenn entsprechende einseitige Öffnungen im Rohrprofil der Längslenker vorgesehen sind, oder durch die Längslenker 13, 14 durchgesteckt sein, wenn doppelseitig Öffnungen im Rohrprofil der Längslenker vorgesehen sind. Vorzugsweise werden die Teile zu einer fertigen Verbundlenkerachse 11 miteinander verschweißt.

Neben dem hier angesprochenen Verschweißen der Teile miteinander sind auch andere Verbindungstechniken, die ständige räumliche Verformungen der Verbundlenkerachse dauerhaft überstehen, möglich, beispielsweise Verkleben oder Vernieten.

Die Querstrebe kann aus einem Rohrkörper von ursprünglich über der Länge gleichen Querschnitt und mit ursprünglich über der Länge konstanter Wandstärke hergestellt sein, wobei in mehreren Umformschritten die abschließende Formgebung herbeigeführt wird.

In besonders günstiger Ausgestaltung ist die Querstrebe aus einem Rohrkörper hergestellt, der ursprünglich über der Länge konstanten Querschnitt hat, jedoch in einem mittleren Bereich, der einen Teil des mittleren Abschnittes 18 oder die gesamte Länge des mittleren Abschnitts 18 umfassen kann, eine geringere Wandstärke aufweist, als die zu beiden Enden hin daran anschließenden Bereich, insbesondere, diejenigen Teile, die abschließend die beiden Endabschnitte 19, 20 bilden.

Neben der durch die Formgebung der Querstrebe 12 erzielten größeren Biegeweichheit im mittleren Abschnitt 18 wird hiermit zusätzlich ein gesteigerter Unterschied der Biegeweichheit im mittleren Abschnitt 18 gegenüber den Endabschnitten 19, 20 durch die verwendete unterschiedliche Blechdicke erzielt.

Zwischenprodukte dieser Art, das heißt Rohre mit mittleren Abschnitten geringerer Wandstärke als in den Endabschnitten können durch flexibles Walzen (dick/dünn Walzen) von Bandmaterial und anschließendes Zuschneiden, Umformen und Verschweißen zum Rohr erzeugt werden.

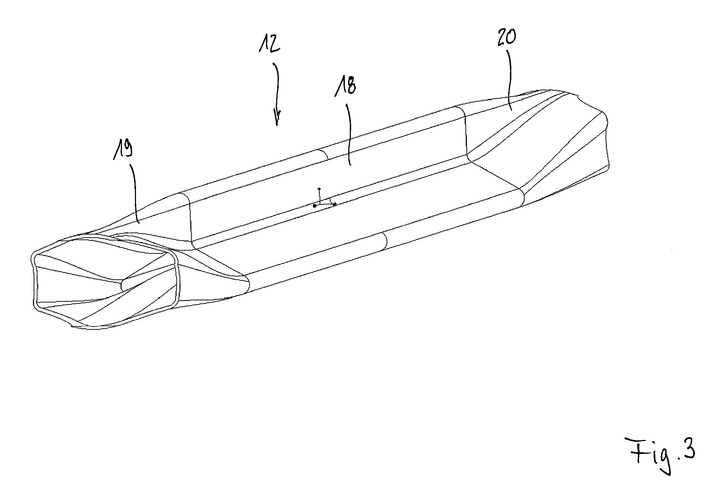

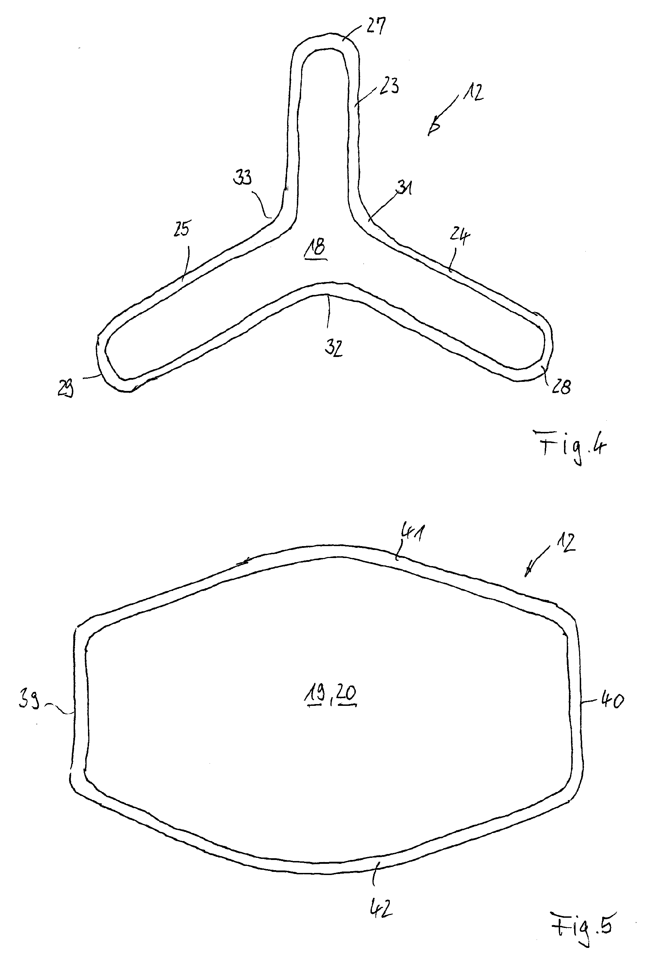

Die nachfolgenden Figuren 3 bis 5 zeigen eine erfindungsgemäße Querstrebe 12 oder auch Querträger in einer ersten bevorzugten Ausführungsform, bei der der mittlere Abschnitt 18 einen Profilquerschnitt hat, der die Form eines Dreistern- oder Y-förmigen Balkensterns mit gerundeten Enden umschreibt. Abweichend von der Querstrebe nach Figur 1 weist hierbei ein Steg mittig nach oben. Die Form dieses Querschnittes ist besonders in Figur 4 verdeutlicht und umfaßt drei konkav nach innen gezogene Einzugsbereiche 31, 32, 33 und drei Stege 23, 24, 25 mit konvex nach außen gekrümmten Auswölbungen 27, 28, 29 an den Enden der Stege. Von diesem Querschnitt des mittleren Abschnitts 18 ausgehend verändert sich der Querschnitt zu den Enden der Querstrebe hin zu einem Querschnitt, der insbesondere in Figur 5 erkennbar ist, und der kastenähnlich ist und sich aus geraden kurzen Abschnitten 39, 40 und langen Abschnitten 41, 42 mit konvexer Außenkrümmung zusammensetzt.

Die Wandstärke des Querträgers nach Figur 4 im mittleren Abschnitt 18 des Querträgers ist geringer als die Wandstärke nach Figur 5 in einem Endabschnitt 19, 20 des Querträgers.

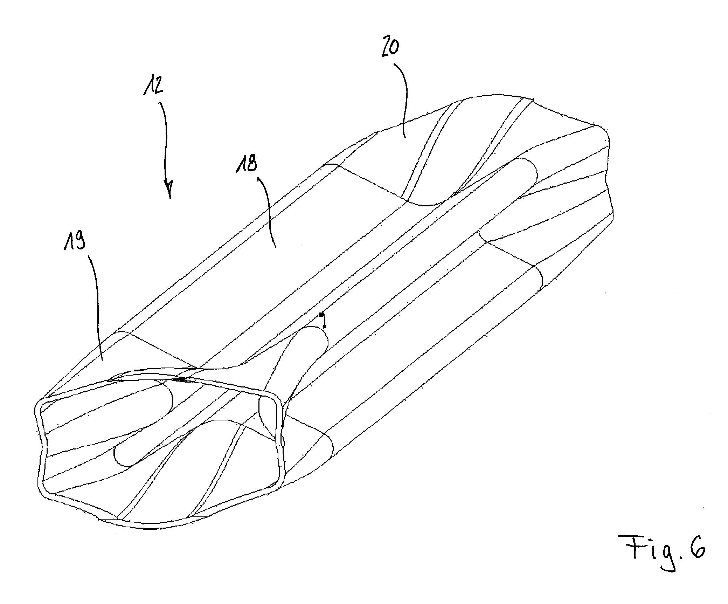

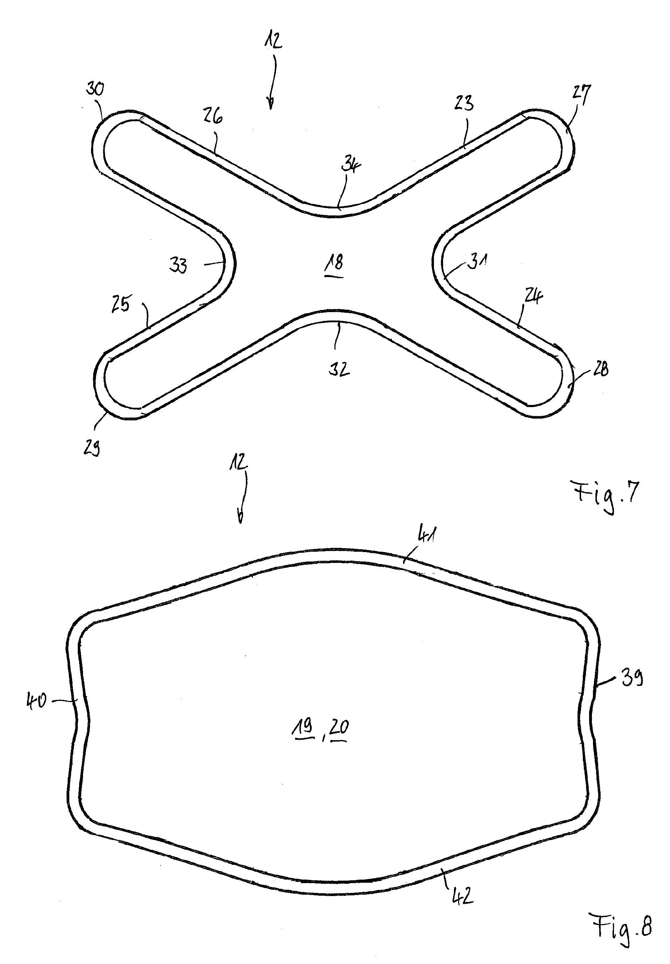

Die nachfolgenden Figuren 6 bis 8 zeigen eine erfindungsgemäße Querstrebe oder auch Querträger in einer zweiten bevorzugten Ausführungsform, bei der der mittlere Abschnitt einen Profilquerschnitt hat, der die Form eines Vierstern- oder X-förmigen Balkensterns mit gerundeten Enden umschreibt. Die X-Form ist liegend in Richtung einer Ebene durch die Achsen A, B orientiert. Die Form dieses Querschnittes ist besonders in Figur 7 verdeutlicht und umfaßt vier konkav nach innen gezogene Einzugsbereiche 31, 32, 33, 34 und vier Stege 23, 24, 25, 26 mit konvex nach außen gekrümmten Auswölbungen 27, 28, 29, 30 an den Enden der Stege. Von diesem Querschnitt des mittleren Abschnitts ausgehend verändert sich der Querschnitt zu den Enden der Querstrebe hin zu einem Querschnitt, der insbesondere in Figur 8 erkennbar ist, und der kastenähnlich ist und sich aus kurzen Abschnitten 39, 40 mit konkaven Einziehungen und landen Abschnitten 41, 42 mit konvexer Außenkrümmung zusammensetzt.

Die Wandstärke des Querträgers nach Figur 7 im mittleren Abschnitt 18 des Querträgers ist geringer als die Wandstärke nach Figur 8 in einem Endabschnitt 19, 20 des Querträgers.

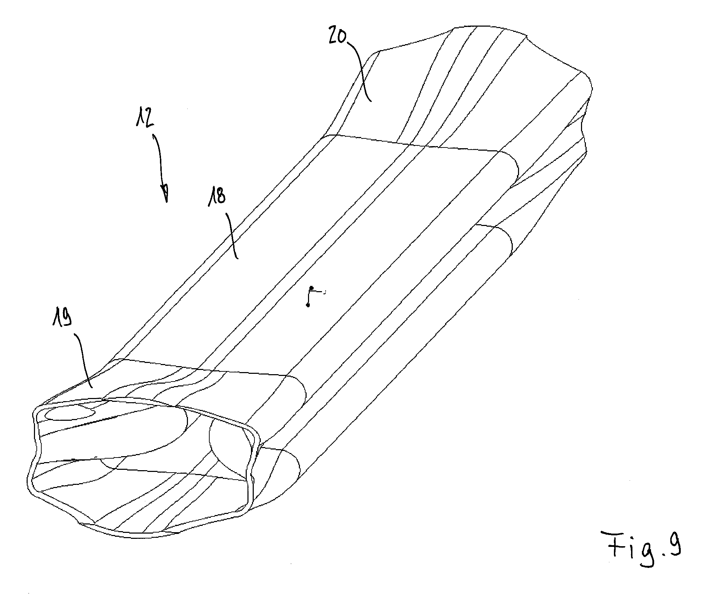

Die nachfolgenden Figuren 9 bis 11 zeigen eine erfindungsgemäße Querstrebe oder auch Querträger in einer dritten bevorzugten Ausführungsform, bei der der mittlere Abschnitt einen Profilquerschnitt hat, der die Form eines H-förmigen Balkensterns mit gerundeten Enden umschreibt. Die H-Form ist liegend in Richtung einer Ebene durch die Achsen A, B orientiert. Die Form dieses Querschnittes ist besonders in Figur 4 verdeutlicht und umfaßt zwei konkav nach innen gezogene Einzugsbereiche 31, 32 und vier Stege 23, 24, 25, 26 mit konvex nach außen gekrümmten Auswölbungen 27, 28, 29, 30 an den Enden der Stege. Von diesem Querschnitt des mittleren Abschnitts ausgehend verändert sich der Querschnitt zu den Enden der Querstrebe hin zu einem Querschnitt, der insbesondere in Figur 5 erkennbar ist, und der sich aus geraden Abschnitten und konvexen Außenkrümmungen zusammensetzt und rautenähnlich ist.

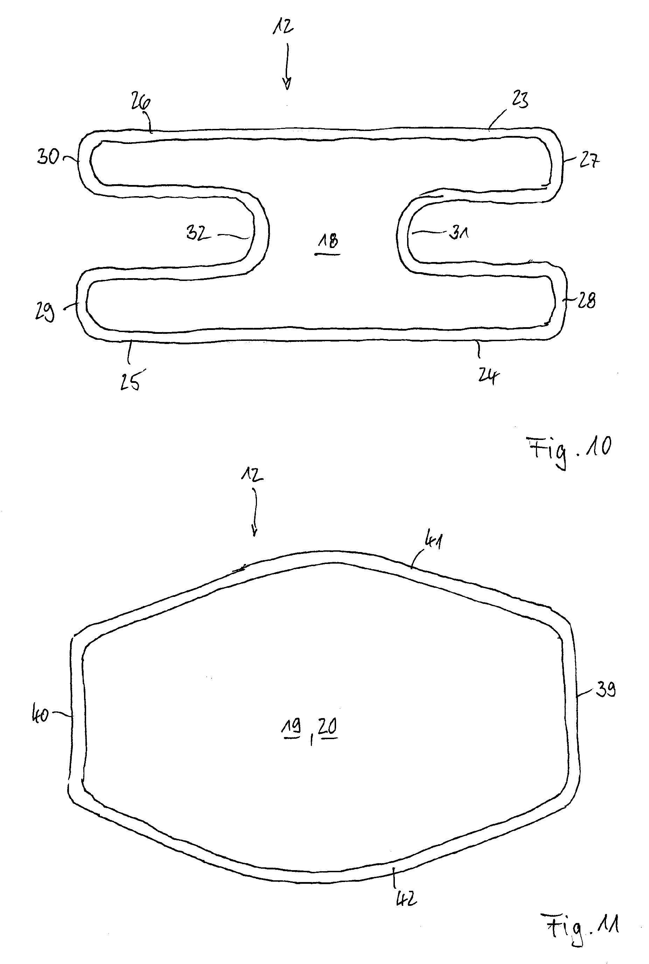

Die Wandstärke des Querträgers nach Figur 10 im mittleren Abschnitt 18 des Querträgers ist geringer als die Wandstärke nach Figur 11 in einem Endabschnitt 19, 20 des Querträgers.

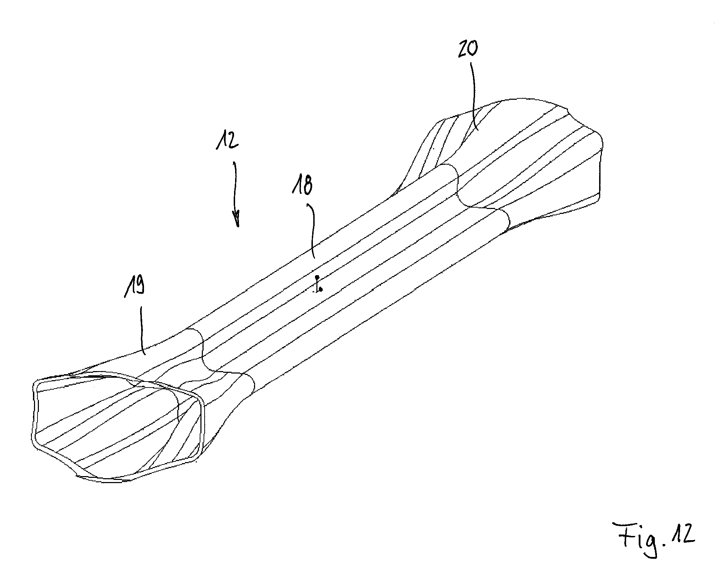

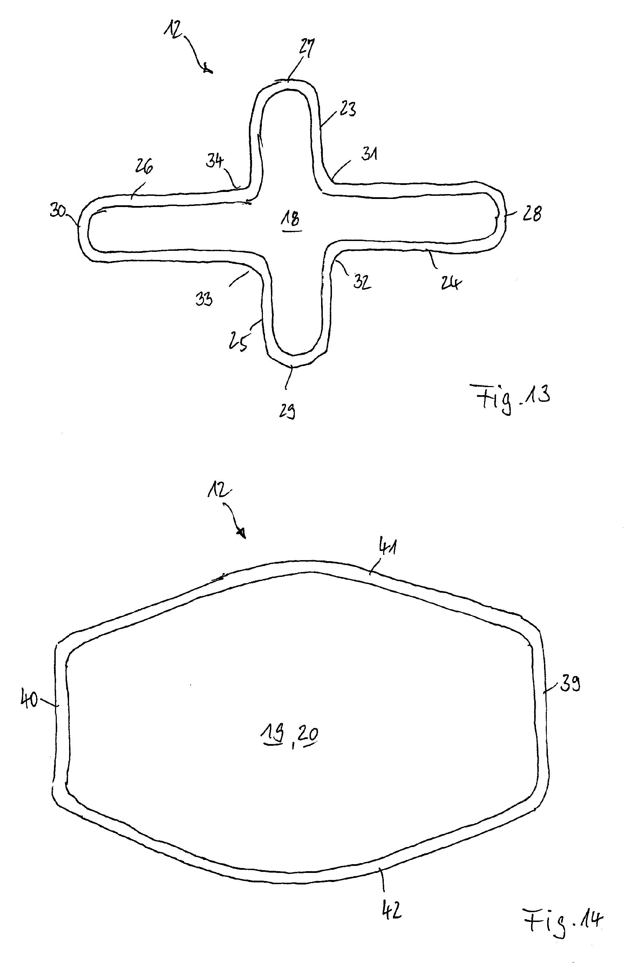

Die nachfolgenden Figuren 12 bis 14 zeigen eine erfindungsgemäße Querstrebe oder Querträger in einer vierten bevorzugten Ausführungsform, bei der der mittlere Abschnitt einen Profilquerschnitt hat, der die Form eines Vierstern- oder +-förmigen Balkensterns mit gerundeten Enden umschreibt. Die +-Form hat einen längeren Querbalken der in Richtung einer Ebene durch die Achsen A, B orientiert ist. Die Form dieses Querschnittes ist besonders in Figur 13 verdeutlicht und umfaßt vier konkav nach innen gezogene Einzugsbereiche 31, 32, 33, 34 und vier Stege 23, 24, 25, 26 mit konvex nach außen gekrümmten Auswölbungen 27, 28, 29, 30 an den Enden der Stege. Von diesem Querschnitt des mittleren Abschnitts ausgehend verändert sich der Querschnitt zu den Enden der Querstrebe hin zu einem Querschnitt, der insbesondere in Figur 14 erkennbar ist, und der kastenähnlich ist und sich aus geraden kurzen Abschnitten 39, 40 und langen Abschnitten 41, 42 mit konvexer Außenkrümmung zusammensetzt.

Die Wandstärke des Querträgers nach Figur 13 im mittleren Abschnitt 18 des Querträgers ist geringer als die Wandstärke nach Figur 14 in einem Endabschnitt 19, 20 des Querträgers.

### Bezugszeichenliste

- 11: Verbundlenkerachse
- 12: Querstrebe
- 13: Längslenker
- 14: Längslenker
- 15: Winkelstück, Federabstützung
- 16: Winkelstück, Federabstützung
- 17:
- 18: Mittelabschnitt
- 19: Endabschnitt
- 20: Endabschnitt
- 21: Öffnung
- 22: Öffnung
- 23: Steg
- 24: Steg
- 25: Steg
- 26: Steg
- 27: Auswölbung
- 28: Auswölbung
- 29: Auswölbung
- 30: Auswölbung
- 31: Einziehung
- 32: Einziehung
- 33: Einziehung
- 34: Einziehung
- 35: Ausschnitt
- 36: Ausschnitt
- 37: Federauflage
- 38: Federauflage
- 39: Wandabschnitt (kurz)
- 40: Wandabschnitt (kurz)
- 41: Wandabschnitt (lang)
- 42: Wandabschnitt (lang)

## Patentansprüche

1. Querträger für eine Verbundlenkerachse (11), umfassend zwei Längslenker (13, 14) und einen Querträger (12), der mit den Längslenkern (13, 14) jeweils fest verbindbar ist und der aus einem Blechprofil mit geschlossenem Querschnitt besteht, wobei ein mittlerer Abschnitt (18) des Querträgers (12) eine geringere Querschnittsfläche hat, als die mit den Längslenkern (13, 14) verbindbaren Endabschnitte (19, 20) des Querträgers (12),
wobei der Querschnitt des mittleren Abschnitts (18) mindestens drei von einer Außenwölbung (27, 28, 29, 30) abgeschlossene doppelwandige Stege (23, 24, 25, 26) aufweist, die zumindest zum Teil durch Einziehungen (31, 32, 33, 34) voneinander getrennt sind,
wobei die Wandstärke im mittleren Abschnitt (18) des Querträgers (12) geringer ist, als in den Endabschnitten (19, 20).

2. Querträger für eine Verbundlenkerachse nach Anspruch 1,
**dadurch gekennzeichnet,**
**daß** die Wandungen der doppelwandigen Stege (23, 24, 25, 26) kontaktfrei relativ zueinander sind.

3. Querträger für eine Verbundlenkerachse nach Anspruch 1 oder 2,
**dadurch gekennzeichnet,**
**daß** die Wandungen im Bereich der Einziehungen (31, 32, 33, 34) zwischen den Stegen (23, 24, 25, 26) kontaktfrei relativ zueinander sind.

4. Querträger für eine Verbundlenkerachse nach einem der Ansprüche 1 bis 3, **dadurch gekennzeichnet,**
**daß** der Querschnitt des mittleren Abschnitts (18) Y-förmig mit drei voneinander getrennten Stegen (23, 24, 25) oder X-förmig mit vier voneinander getrennten Stegen (23, 24, 25, 26) ist.

5. Querträger für eine Verbundlenkerachse nach einem der Ansprüche 1 bis 3, **dadurch gekennzeichnet,**
**daß** der Querschnitt des mittleren Abschnitts (18) H-förmig ist und vier voneinander getrennte Stege (23, 24, 25, 26) mit abschließender Außenwölbung und zwischen jeweils zwei Paaren von Stegen liegende Einziehungen (31, 32) aufweist.

6. Querträger für eine Verbundlenkerachse nach einem der Ansprüche 1 bis 5, **dadurch gekennzeichnet,**
**daß** der mittlere Abschnitt (18) des Querträgers (12) einen konstanten Querschnitt hat und die Endabschnitte (19, 20) sich zu den Enden hin stetig erweitern.

7. Querträger für eine Verbundlenkerachse nach Anspruch 6,
**dadurch gekennzeichnet,**
**daß** sich in den Endabschnitten (19, 20) des Querträgers (12) die konkave Krümmung der Einziehungen zu den Enden hin zunehmend verringert.

8. Querträger für eine Verbundlenkerachse nach einem der Ansprüche 1 bis 7,
**dadurch gekennzeichnet,**
**daß** sich in den Endabschnitten (19, 20) des Querträgers (12) die konvexe Krümmung der jeweils zwischen den Einziehungen liegenden Bereiche zu den Enden hin zunehmend verringert.

9. Verbundlenkerachse mit einem Querträger nach einem der Ansprüche 1 bis 8, umfassend zwei Längslenker und einen Querträger, der mit den Längslenkern jeweils fest verbunden ist.

10. Verbundlenkerachse nach Anspruch 9,
**dadurch gekennzeichnet,**
**daß** der Querträger (12) an die Längslenker (13, 14) stumpf angesetzt ist.

11. Verbundlenkerachse nach Anspruch 9,
**dadurch gekennzeichnet,**
**daß** der Querträger (12) in die Längslenker jeweils einseitig eingesteckt oder durch die Längslenker (13, 14) durchgesteckt ist.

12. Verbundlenkerachse nach einem der Ansprüche 9 bis 11,
**dadurch gekennzeichnet,**
**daß** jeweils zwischen dem Querträger (12) und den beiden Längslenker (13, 14) Winkelstücke (15, 16) eingesetzt sind.

13. Verfahren zur Herstellung eines Querträgers für eine Verbundlenkerachse nach einem der Ansprüche 1 bis 8,
**dadurch gekennzeichnet,**
**daß** ein Rohr aus Flachmaterial ausgeformt und längs verschweißt wird und daß das Rohr in einem mittleren Abschnitt (18) in mindestens zwei Umfangsabschnitten nach innen verformt wird, wobei die Wandungen innen kontaktfrei zueinander bleiben,
wobei das Rohr aus Flachmaterial mit in Längsrichtung variabler Dicke ausgeformt wird.

14. Verfahren nach Anspruch 13,
**dadurch gekennzeichnet,**
**daß** das Rohr in einem ersten Verfahrensschritt über der ganzen Länge gleichmäßig verformt wird und in einem zweiten Verfahrensschritt in einem mittleren Abschnitt (18) weiter querschnittsreduziert wird.

15. Verfahren nach Anspruch 13,
**dadurch gekennzeichnet,**
**daß** das Rohr in einem ersten Verfahrensschritt über der ganzen Länge gleichmäßig verformt wird und in einem zweiten Verfahrensschritt in den Endabschnitten (19, 20) querschnittserweitert wird.
